# EUROPEAN PATENT APPLICATION

(11) **EP 4 535 460 A1**
(43) Date of publication of application: **09.04.2025**
(21) Application number: 23810738.7
(22) Date of filing: 24.04.2023
(51) Int. Cl.: H01M 4/36

(54) **POSITIVE ELECTRODE MATERIAL, AND POSITIVE ELECTRODE SHEET AND BATTERY COMPRISING SAME**

(30) Priority: 25.05.2022 CN 202210583668
(71) Applicant: Zhuhai CosMX Battery Co., Ltd., Zhuhai, Guangdong 519180 (CN)
(72) Inventor: ZENG, Jiajiang, Zhuhai, Guangdong 519180 (CN); LI, Suli, Zhuhai, Guangdong 519180 (CN)
(74) Representative: Murgitroyd & Company
(86) International application number: PCT/CN2023/090370
(87) International publication number: WO 2023/226665

(57) **Abstract**

Disclosed are a positive electrode material, and a positive electrode plate and a battery including the positive electrode material. The positive electrode material including lithium cobalt oxide with an O3 phase structure and lithium cobalt oxide with an O2 phase structure in the present invention has a higher capacity and a significantly improved rate while also having excellent cycling performance.

## Description

### TECHNICAL FIELD

The present invention pertains to the field of battery technologies, and specifically, to a positive electrode material, and a positive electrode plate including the positive electrode material and a battery.

### BACKGROUND

Over the past decade, with the continuous development of technologies in portable mobile products such as mobile phones and computers, the development of lithium cobalt oxide positive electrode materials has also made rapid progress. A charge/discharge cut-off voltage related has rapidly transitioned from the initial 4.2-4.3 V to the current 4.45-4.48 V, and may eventually reach 4.5 V to 4.6 V, or even higher. However, when the charge/discharge cut-off voltage exceeds 4.5 V, the lithium cobalt oxide positive electrode material faces a series of adverse phase changes, resulting in problems such as rapid battery capacity fading and a rapid cycling performance drop.

Therefore, it is very important to develop a positive electrode material with stable electrochemical properties at a high voltage and with higher energy density.

### SUMMARY

It is found that a most widely used lithium cobalt oxide positive electrode material has an O3 phase structure, belongs to an R-3m space group, and is the most stable of all structures and is also the easiest to prepare. An O2 phase or an O4 phase is one of a plurality of structures of lithium cobalt oxide. Due to its metastable structure, it is difficult to prepare by using a conventional high-temperature solid-phase sintering method. It is usually prepared through ion exchange of Nacontaining layered compounds. Compared with lithium cobalt oxide with the O3 phase structure, lithium cobalt oxide with the O2 phase structure has a higher capacity and a higher rate, but has a severe cycle performance drop. A lithium cobalt oxide material with the O3 phase structure after doping/coating modification has good cycling performance.

To overcome disadvantages of the conventional technology, the present invention provides a positive electrode material, and a positive electrode plate including the positive electrode material and a battery. The positive electrode material has characteristics of both a high capacity and a high rate of lithium cobalt oxide with an O2 phase structure and high cycle of lithium cobalt oxide with an O3 phase structure. The positive electrode plate including the positive electrode material has a high capacity and good rate performance, and the battery including the positive electrode material has good cycle stability.

To achieve the foregoing objectives, the present invention provides the following solutions.

A positive electrode material is provided. The positive electrode material includes lithium cobalt oxide with an O3 phase structure and lithium cobalt oxide with an O2 phase structure.

According to a specific implementation, based on a total weight of the positive electrode material, a weight content of the lithium cobalt oxide with the O3 phase structure ranges from 60 wt% to 95 wt% (for example, is 60 wt%, 65 wt%, 70 wt%, 75 wt%, 80 wt%, 85 wt%, 90 wt%, or 95 wt%). The weight content of the lithium cobalt oxide with the O3 phase structure is limited to being within the specific range described above to ensure that the positive electrode material has good cycle stability and high structural stability, and preferably ranges from 70 wt% to 90 wt%.

According to a specific implementation, based on a total weight of the positive electrode material, a weight content of the lithium cobalt oxide with the O2 phase structure ranges from 5 wt% to 40 wt% (for example, is 5 wt%, 10 wt%, 15 wt%, 20 wt%, 25 wt%, 30 wt%, 35 wt%, or 40 wt%). The weight content of the lithium cobalt oxide with the O2 phase structure is limited to being within the specific range described above to ensure that the positive electrode material has high rate performance and high capacity performance, and preferably ranges from 10 wt% to 30 wt%.

In the present invention, the lithium cobalt oxide with the O2 phase structure refers to lithium cobalt oxide including the O2 phase structure. Regardless of whether the lithium cobalt oxide with the O2 phase structure is doped, or treated in another manner, each lithium cobalt oxide with the O2 phase structure is the lithium cobalt oxide with the O2 phase structure described in the present invention.

According to a specific implementation, the lithium cobalt oxide with the O2 phase structure includes lithium cobalt oxide with the O2 phase structure in an Me-element bulk phase, and Me includes at least one of Al, Mg, Ti, or Mn. M-element bulk phase doping can ensure that the lithium cobalt oxide with the O2 phase structure has better structural stability and better electrochemical properties at a higher voltage (greater than 4.5 V).

In an example, Me is at least one of Al, Mg, Ti, or Mn.

According to a specific implementation, a chemical formula of the lithium cobalt oxide with the O2 phase structure is LiₓNa_{y}Co_{1-z}Me_{z}O₂, where 0.85 < x < 1.3 (for example, x is 0.9, 0.92, 0.95, 0.96, 0.98, 1, 1.01, 1.02, 1.05, 1.1, 1.2, or 1.25), 0 < y ≤ 0.03 (for example, y is 0.01, 0.02, or 0.03), 0 ≤ z ≤ 0.05 (for example, z is 0.001, 0.002, 0.005, 0.007, 0.01, 0.02, 0.03, 0.04, or 0.05), and Me includes at least one of Al, Mg, Ti, or Mn.

In an example, a chemical formula of the lithium cobalt oxide with the O2 phase structure is LiₓNa_{y}Co_{1-z}Me_{z}O₂, where 0.85 < x < 1.3 (for example, x is 0.9, 0.92, 0.95, 0.96, 0.98, 1, 1.01, 1.02, 1.05, 1.1, 1.2, or 1.25), 0 < y ≤ 0.03 (for example, y is 0.01, 0.02, or 0.03), 0 < z ≤ 0.05 (for example, z is 0.001, 0.002, 0.005, 0.007, 0.01, 0.02, 0.03, 0.04, or 0.05), and Me includes at least one of Al, Mg, Ti, or Mn.

In an example, a chemical formula of the lithium cobalt oxide with the O2 phase structure is Li_{1.02}Na_{0.01}Co_{0.96}Al_{0.04}O₂, Li_{1.01}Na_{0.02}Co_{0.96}Al_{0.035}Mg_{0.005}O₂, Li_{1.0}Na_{0.025}Co_{0.96}Al_{0.037}Ti_{0.003}O₂, Li_{0.9}Na_{0.02}Co_{0.96}Al_{0.038}Mn_{0.002}O₂, or Li_{0.95}Na_{0.02}Co_{0.993}Al_{0.005}Mg_{0.001}Ti_{0.001}O₂.

In the present invention, the lithium cobalt oxide with the O3 phase structure refers to lithium cobalt oxide including the O3 phase structure. Regardless of whether the lithium cobalt oxide with the O3 phase structure is doped or coated, each lithium cobalt oxide with the O3 phase structure is the lithium cobalt oxide with the O3 phase structure described in the present invention.

According to a specific implementation, the lithium cobalt oxide with the O3 phase structure includes lithium cobalt oxide with the O3 phase structure that undergoes M¹ element bulk phase doping and M²ₐO_{b} surface coating treatment, where M¹ and M² are the same or different, and each of M¹ and M² is at least one of Al, Mg, Ti, Zr, La, Y, Ce, Te, Nb, or W. Such doping and coating treatment can ensure that the lithium cobalt oxide with the O3 phase structure has better structural stability and better electrochemical performance at a higher voltage (greater than 4.5 V).

According to a specific implementation, the lithium cobalt oxide with the O3 phase structure has a core-shell structure, including a shell layer and a core. The core includes a material with a chemical formula of Li_{x'}Co_{1-z'}M¹_{z'}O₂, where 0.95 < x' < 1.3 (for example, x' is 0.96, 0.98, 1, 1.02, 1.05, 1.1, 1.2, or 1.25), and 0 ≤ z' ≤ 0.05 (for example, z' is 0.001, 0.002, 0.003, 0.004, 0.005, 0.006, 0.007, 0.008, 0.009, 0.01, 0.02, 0.03, 0.04, or 0.05). The shell layer includes a material with a chemical formula of M²ₐO_{b}, where a and b satisfy chemical formula valency conservation, M¹ and M² are the same or different, and each of M¹ and M² is at least one of Al, Mg, Ti, Zr, La, Y, Ce, Te, Nb, or W.

In an example, the lithium cobalt oxide with the O3 phase structure has a core-shell structure, including a shell layer and a core, the core includes a material with a chemical formula of LiCo_{0.993}Al_{0.005}Mg_{0.001}Ti_{0.001}O₂, and the shell layer includes a material including TiO₂, WO₃, and Y₂O₃.

In an example, the lithium cobalt oxide with the O2 phase structure includes lithium cobalt oxide with the O2 phase structure in an Me-element bulk phase, and Me includes at least one of Al, Mg, Ti, or Mn; and the lithium cobalt oxide with the O3 phase structure includes lithium cobalt oxide with the O3 phase structure that undergoes M¹ element bulk phase doping and M²ₐO_{b} surface coating treatment, where M¹ and M² are the same or different, and each of M¹ and M² is at least one of Al, Mg, Ti, Zr, La, Y, Ce, Te, Nb, or W.

According to a specific implementation, based on a total weight of the lithium cobalt oxide with the O3 phase structure, a weight content of the shell layer ranges from 0.05 wt% to 2 wt%, and for example, is 0.05 wt%, 0.06 wt%, 0.08 wt%, 0.1 wt%, 0.2 wt%, 0.3 wt%, 0.4 wt%, 0.5 wt%, 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, or 2 wt%.

According to a specific implementation, a median particle size D50 of the lithium cobalt oxide with the O3 phase structure ranges from 15.5 µm to 18 µm, and for example, is 15.5 µm, 16 µm, 16.5 µm, 17 µm, 17.5 µm, or 18 µm.

According to a specific implementation, a median particle size D50 of the lithium cobalt oxide with the O2 phase structure ranges from 7 µm to 10 µm, and for example, is 7 µm, 7.5 µm, 8 µm, 8.5 µm, 9 µm, 9.5 µm, or 10 µm.

According to a specific implementation, a median particle size D50 of the lithium cobalt oxide with the O3 phase structure ranges from 15.5 µm to 18 µm, and/or a median particle size D50 of the lithium cobalt oxide with the O2 phase structure ranges from 7 µm to 10 µm. With varying particle sizes of the lithium cobalt oxide with the O2 phase structure and the lithium cobalt oxide with the O3 phase structure, press density of the positive electrode material can be further improved, thereby improving energy density of a battery.

According to a specific implementation, through an X-ray diffraction test, the positive electrode material has all characteristic peaks of an XRD spectrum of the lithium cobalt oxide with the O3 phase structure. The positive electrode material further includes a (002) characteristic peak, a (102) characteristic peak, and a (103) characteristic peak, and ranges of diffraction angles 2θ of the characteristic peaks are respectively: 18.0 < 2θ₍₀₀₂₎ < 19.4, 41.2 < 2θ₍₁₀₂₎ < 42.2, and 46.5 < 2θ₍₁₀₃₎ < 47.5. The (002) characteristic peak, the (102) characteristic peak, and the (103) characteristic peak are characteristic peaks of the lithium cobalt oxide with O2 phase structure.

According to a specific implementation, a median particle size D50 of the positive electrode material ranges from 12 µm to 17 µm (for example, is 12 µm, 13 µm, 14 µm, 15 µm, 16 µm, or 17 µm).

In the present invention, the lithium cobalt oxide with the O3 phase structure has relatively stable electrochemical properties, good cycling performance, and a relatively high voltage platform, but its capacity is only 180 mAh/g at a voltage of 4.5 V, its structure is likely to be damaged at a charge cut-off voltage higher than 4.5 V, and its cycling performance deteriorates. The lithium cobalt oxide with the O2 phase structure has relatively high capacity and rate performance, but has a relatively low voltage platform and relatively poor cycling performance. The inventors of the present invention have discovered that after these two types of lithium cobalt oxide with different phase structures are mixed, cycling performance of a battery assembled with the obtained positive electrode material is greatly improved, and electrochemical properties of the battery, such as capacity and rate performance, can be further improved. In addition, a bulk phase structure of the lithium cobalt oxide with the O3 phase structure is uniformly doped with specific metal elements through an effective means, and a surface of the lithium cobalt oxide with the O3 phase structure is coated with a specific metal oxide, so that structural stability of the lithium cobalt oxide with the O3 phase structure at a high voltage can be effectively improved, thereby improving cycling performance and safety performance of the battery.

The present invention further provides a positive electrode plate, and the positive electrode plate includes the foregoing positive electrode material.

According to an implementation, the positive electrode plate includes a positive electrode current collector and a positive electrode active material layer disposed on at least one surface of the positive electrode current collector, and the positive electrode active material layer includes the foregoing positive electrode material.

According to a specific implementation, the positive electrode active material layer further includes a conductive agent and a binder.

According to a specific implementation, mass percentages of components in the positive electrode active material layer are: the positive electrode material ranging from 70 wt% to 99 wt% (which is, for example, 70 wt%, 75 wt%, 80 wt%, 85 wt%, 90 wt%, 95 wt%, or 99 wt%), the conductive agent ranging from 0.5 wt% to 15 wt% (which is, for example, 0.5 wt%, 1 wt%, 5 wt%, 10 wt%, or 15 wt%), and the binder ranging from 0.5 wt% to 15 wt% (which is, for example, 0.5 wt%, 1 wt%, 5 wt%, 10 wt%, or 15 wt%).

Preferably, the mass percentages of the components in the positive electrode active material layer are: the positive electrode material ranging from 80 wt% to 98 wt%, the conductive agent ranging from 1 wt% to 10 wt%, and the binder ranging from 1 wt% to 10 wt%.

Preferably, the mass percentages of the components in the positive electrode active material layer are: the positive electrode material ranging from 90 wt% to 98 wt%, the conductive agent ranging from 1 wt% to 5 wt%, and the binder ranging from 1 wt% to 5 wt%.

Further, preferably, the mass percentages of the components in the positive electrode active material layer are: the positive electrode material ranging from 90 wt% to 96 wt%, the conductive agent ranging from 2 wt% to 5 wt%, and the binder ranging from 2 wt% to 5 wt%.

The present invention further provides a battery, and the battery includes the foregoing positive electrode material or the battery includes the foregoing positive electrode plate.

According to an implementation of the present invention, a charge cut-off voltage of the battery is greater than or equal to 4.5 V.

Beneficial effects of the present invention are as follows:
The present invention provides a positive electrode material, and a positive electrode plate including the positive electrode material and a battery. In the present invention, two types of lithium cobalt oxide with different structures are mixed, so that the obtained positive electrode material with mixed lithium cobalt oxide can have a significantly improved capacity and rate while also having excellent cycling performance.

### BRIEF DESCRIPTION OF THE DRAWINGS

FIG. 1 shows XRD spectra of positive electrode materials in Example 1, Comparative Example 1, and Comparative Example 2.
FIG. 2 is an SEM graph of the positive electrode material in Example 1.

### DETAILED DESCRIPTION OF THE EMBODIMENTS

The following further describes in detail the present invention with reference to specific embodiments. It should be understood that the following embodiments are merely examples for description and intended to explain the present invention and shall not be construed as a limitation on the protection scope of the present invention. All technologies achieved based on the foregoing content of the present invention are included in the protection scope of the present invention.

Unless otherwise specified, the experimental methods used in the following examples are all conventional methods, and the reagents, materials, and the like used in the following examples, unless otherwise specified, are commercially available.

In the following examples, a CR2032 button cell was used to study electrochemical properties of the positive electrode material. A method for preparing the button cell is as follows:
NMP was used as a solvent for the positive electrode plate. A positive electrode active material (the positive electrode material prepared in the Examples and the Comparative Examples), a Super P conductive agent, and a binder polyvinylidene fluoride PVDF were mixed at a mass ratio of 97:1.5:1.5 and stirred evenly in a degassing machine to prepare a positive electrode slurry with a solid content of 70%. The positive electrode slurry was evenly coated on a surface of an aluminum foil, baked in a vacuum oven at 100°C for 12 hours, and then rolled and cut to obtain a positive electrode plate.

In a glove box, the positive electrode plate, a lithium-plate negative electrode, and a PP/PE/PP three-layer separator were assembled by using a 1-mol/L LiPF₆/(EC+DEC) electrolyte solution (with a volume ratio of 1:1) to obtain a button cell for electrochemical testing.

A performance test process of the button battery prepared above was as follows:
At a test temperature of 25°C, under a voltage range of 3.0 V to 4.5 V, a rate performance test was first carried out, where a charging rate was 0.1C, and discharge rates were 0.1C, 0.2C, 0.5C, 1C, 2C, and 5C in sequence. The rate performance test is shown in Table 1. Then, at a charge/discharge rate of 0.5C, a 50-cycle cycling performance test was carried out at a voltage range of 3.0 V to 4.55 V.

### Example 1

The positive electrode active material used in this example was a mixture of lithium cobalt oxide with an O2 phase structure and lithium cobalt oxide with an O3 phase structure, where a mass percentage of the lithium cobalt oxide with the O2 phase structure was 10%, and a mass fraction of the lithium cobalt oxide with the O3 phase structure was 90%. A chemical formula of the lithium cobalt oxide with the O2 phase structure was Li_{1.02}Na_{0.01}Co_{0.96}Al_{0.04}O₂, and a median particle size D50 of the lithium cobalt oxide with the O2 phase structure was 8. 5 µm. The lithium cobalt oxide with the O3 phase structure had a core-shell structure, and the core included a material with a chemical formula of Li_{1.02}Na_{0.01}Co_{0.96}Al_{0.04}O₂, and the shell layer included a material with a chemical formula of TiO₂, WO₃, or Y₂O₃. Based on a total weight of the lithium cobalt oxide with the O3 phase structure, a weight content of the shell layer was 0.1 wt%, and a median particle size D50 of the lithium cobalt oxide with the O3 phase structure was 16.5 µm.

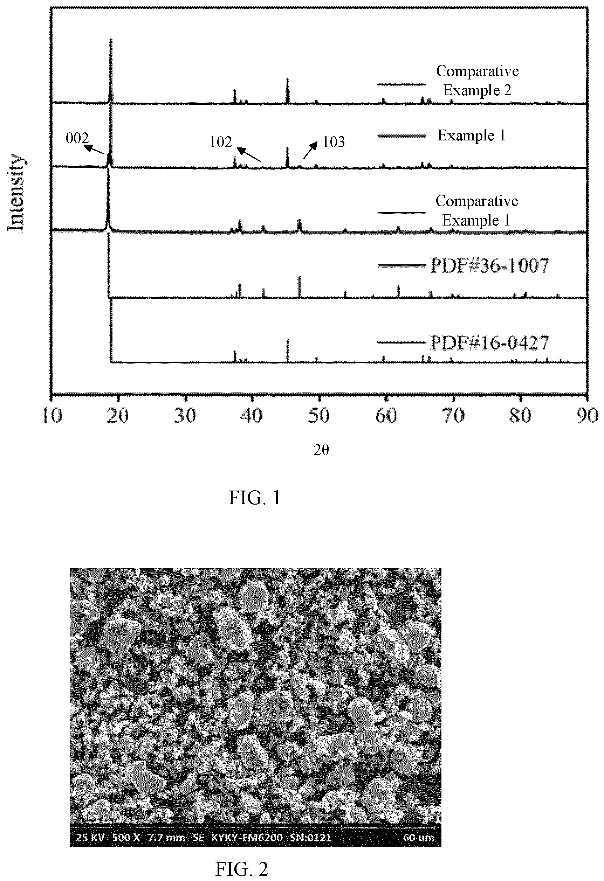

A median particle size of the positive electrode material was 15.5 µm, and its SEM graph was shown in FIG. 2.

FIG. 1 shows XRD spectra of Example 1, Comparative Example 1, and Comparative Example 2. In the figure, PDF#36-1007 represents a standard XRD spectrum of the lithium cobalt oxide with the O2 phase structure, and PDF#16-0427 represents a standard XRD spectrum of the lithium cobalt oxide with the O3 phase structure.

It can be learned from FIG. 1 that the lithium cobalt oxide of Comparative Example 1 has an O2 phase structure, and the lithium cobalt oxide of Comparative Example 2 has an O3 phase structure. The mixed positive electrode material of Example 1 has all characteristics of lithium cobalt oxide with an O3 phase structure, and also has some characteristic peaks of lithium cobalt oxide with an O2 phase structure: a (002) peak of a 002 crystal plane, a (102) peak of a 102 crystal plane, and a (103) peak of a 103 crystal plane. Angle ranges of the characteristic peaks are: 18.0 < 2θ₍₀₀₂₎ < 19.4, 41.2 < 2θ₍₁₀₂₎ < 42.2, and 46.5 < 2θ₍₁₀₃₎ < 47.5. Therefore, the mixed positive electrode material not only has excellent cycle stability of lithium cobalt oxide with an O3 phase structure, but also has a high capacity and high rate performance of lithium cobalt oxide with an O2 phase structure.

In an electrochemical property test of the button battery, a first discharge specific capacity at 0.1C and at a 4.5 V cut-off voltage was 184.96 mAh/g, and a cycle retention after 50 cycles at 0.5C and at a voltage range of 3.0 V to 4.55 V was 90.22%. Discharge capacity retention rates at different rates are shown in Table 1.

### Example 2

Other operations were the same as those in Example 1, except that a mass percentage of lithium cobalt oxide with an O2 phase structure was 20%, and a mass percentage of lithium cobalt oxide with an O3 phase structure was 80%.

In an electrochemical property test of the button battery, a first discharge specific capacity at 0.1C and at a 4.5 V cut-off voltage was 185.56 mAh/g, and a cycle retention after 50 cycles at 0.5C and at a voltage range of 3.0 V to 4.55 V was 89.76%. Discharge capacity retention rates at different rates are shown in Table 1.

### Example 3

Other operations were the same as those in Example 1, except that a mass percentage of lithium cobalt oxide with an O2 phase structure was 30%, and a mass percentage of lithium cobalt oxide with an O3 phase structure was 70%.

In an electrochemical property test of the button battery, a first discharge specific capacity at 0.1C and at a 4.5 V cut-off voltage was 186.75 mAh/g, and a cycle retention after 50 cycles at 0.5C and at a voltage range of 3.0 V to 4.55 V was 88.52%. Discharge capacity retention rates at different rates are shown in Table 1.

### Example 4

Other operations were the same as those in Example 1, except that lithium cobalt oxide with an O3 phase structure did not undergo M1 element bulk phase doping and M²ₐO_{b} surface coating treatment, and a chemical formula of the lithium cobalt oxide with the O3 phase structure is Li_{1.02}Na_{0.01}Co_{0.96}O₂.

### Example 5

Other operations were the same as those in Example 1, except that a chemical formula of lithium cobalt oxide with an O2 phase structure is Li_{1.02}Na_{0.01}Co_{0.96}O₂.

### Example 6

Other operations were the same as those in Example 1, except that a median particle size D50 of lithium cobalt oxide with an O2 phase structure was 5 µm.

### Example 7

Other operations were the same as those in Example 1, except that a median particle size D50 of lithium cobalt oxide with an O3 phase structure was 10 µm.

### Example 8

Other operations were the same as those in Example 1, except that a mass percentage of lithium cobalt oxide with an O2 phase structure was 40%, and a mass percentage of lithium cobalt oxide with an O3 phase structure was 60%.

### Comparative Example 1

Other operations were the same as those in Example 1, except that a mass percentage of lithium cobalt oxide with an O2 phase structure was 100%.

In an electrochemical property test of the button battery, a first discharge specific capacity at 0.1C and at a 4.5 V cut-off voltage was 191.22 mAh/g, and a cycle retention after 50 cycles at 0.5C and at a voltage range of 3.0 V to 4.55 V was 54.52%. Discharge capacity retention rates at different rates are shown in Table 1.

### Comparative Example 2

Other operations were the same as those in Example 1, except that a mass percentage of lithium cobalt oxide with an O3 phase structure was 100%.

In an electrochemical property test of the button battery, a first discharge specific capacity at 0.1C and at a 4.5 V cut-off voltage was 182.41 mAh/g, and a cycle capacity retention rate after 50 cycles at 0.5C and at a voltage range of 3.0 V to 4.55 V was 85.72%. Discharge capacity retention rates at different rates are shown in Table 1.

**Table 1 Rate performance test results of button batteries in Examples and Comparative Examples**

| | | Voltage range of 3.0 V to 4.5 V | | | | | 3.0 V to 4.55 V |
|---|---|---|---|---|---|---|---|
| | Discharge specific capacity (mAh/g) | Discharge capacity retention rate (%) | | | | | Cycling capacity retention rate |
| | 0.1C | 0.2C | 0.5C | 1C | 2C | 5C | 0.5C |
| Example 1 | 184.96 | 98.48% | 95.59% | 92.81% | 90.29% | 83.29% | 90.22% |
| Example 2 | 185.56 | 98.52% | 95.61% | 93.22% | 90.59% | 85.79% | 89.76% |
| Example 3 | 186.75 | 98.64% | 95.91% | 93.91% | 91.50% | 87.50% | 88.52% |
| Example 4 | 191.37 | 98.20% | 95.18% | 92.31% | 89.18% | 82.35% | 80.68% |
| Example 5 | 188.76 | 97.45% | 94.92% | 92.35% | 89.82% | 82.69% | 82.74% |
| Example 6 | 190.47 | 98.24% | 95.35% | 92.48% | 90.19% | 83.15% | 90.13% |
| Example 7 | 190.1 | 98.54% | 95.75% | 92.90% | 90.43% | 83.52% | 89.02% |
| Example 8 | 194.33 | 99.56% | 97.31% | 93.78% | 91.70% | 88.75% | 86.79% |
| Comparative Example 1 | 191.22 | 100.95% | 99.37% | 94.41% | 92.87% | 90.36% | 54.52% |
| Comparative Example 2 | 182.41 | 97.64% | 94.64% | 92.07% | 85.43% | 75.41% | 85.72% |

It can be learned from the specific test results of the Examples and Comparative Examples in Table 1 that the lithium cobalt oxide with the O2 phase structure has a high capacity and high rate performance, but poor cycling performance; although the lithium cobalt oxide with the O3 phase structure has a capacity and rate performance that are not as high as those of the lithium cobalt oxide with the O2 phase structure, its cycling performance is excellent. In the present invention, after the lithium cobalt oxide with the O2 phase structure and the lithium cobalt oxide with the O3 phase structure are mixed for use, the obtained positive electrode material has excellent cycling performance while having a high capacity and high rate performance. This may be because mixing between the lithium cobalt oxide with O2 phase structure and the lithium cobalt oxide with the O3 phase structure inhibits a structural change and capacity fading of the lithium cobalt oxide at a high voltage, thereby significantly improving cycling performance of the battery.

Embodiments of the present invention are described above. However, the present invention is not limited to the foregoing embodiments. Any modification, equivalent replacement, or improvement made without departing from the principle of the present invention shall fall within the protection scope of the present invention.

## Claims

1. A positive electrode material, **characterized in that** the positive electrode material comprises lithium cobalt oxide with an O3 phase structure and lithium cobalt oxide with an O2 phase structure.

2. The positive electrode material according to claim 1, **characterized in that** based on a total weight of the positive electrode material, a weight content of the lithium cobalt oxide with the O3 phase structure ranges from 60 wt% to 95 wt%, preferably from 70 wt% to 90 wt%; and/or
based on a total weight of the positive electrode material, a weight content of the lithium cobalt oxide with the O2 phase structure ranges from 5 wt% to 40 wt%, preferably from 10 wt% to 30 wt%.

3. The positive electrode material according to claim 1 or 2, **characterized in that** the lithium cobalt oxide with the O2 phase structure comprises lithium cobalt oxide with the O2 phase structure in an Me-element bulk phase, and Me comprises at least one of Al, Mg, Ti, or Mn; and/or the lithium cobalt oxide with the O3 phase structure comprises lithium cobalt oxide with the O3 phase structure that undergoes M¹ element bulk phase doping and M²ₐO_{b} surface coating treatment, wherein M¹ and M² are the same or different, and each of M¹ and M² is at least one of Al, Mg, Ti, Zr, La, Y, Ce, Te, Nb, or W.

4. The positive electrode material according to any one of claims 1 to 3, **characterized in that** a chemical formula of the lithium cobalt oxide with the O2 phase structure is LiₓNa_{y}Co_{1-z}Me_{z}O₂, wherein 0.95 < x < 1.3, 0 < y ≤ 0.03, 0 ≤ z ≤ 0.05, and Me is at least one of Al, Mg, Ti, or Mn; and/or the lithium cobalt oxide with the O3 phase structure has a core-shell structure, comprising a shell layer and a core, the core comprises a material with a chemical formula of Li_{x'}Co_{1-z'}M¹_{z'}O₂, and the shell layer comprises a material with a chemical formula of M²ₐO_{b}; wherein 0.85 < x' < 1.3, 0 ≤ z' ≤ 0.05, a and b satisfy chemical formula valency conservation, M¹ and M² are the same or different, and each of M¹ and M² is at least one of Al, Mg, Ti, Zr, La, Y, Ce, Te, Nb, or W; and
preferably, in the chemical formula of the lithium cobalt oxide with the O2 phase structure, 0 < z ≤ 0.05.

5. The positive electrode material according to any one of claims 1 to 4, **characterized in that** the chemical formula of the lithium cobalt oxide with the O2 phase structure is Li_{1.02}Na_{0.01}Co_{0.96}Al_{0.04}O₂, Li_{1.01}Na_{0.02}Co_{0.96}Al_{0.035}Mg_{0.005}O₂, Li_{1.0}Na_{0.025}Co_{0.96}Al_{0.037}Ti_{0.003}O₂, Li_{0.9}Na_{0.02}Co_{0.96}Al_{0.038}Mn_{0.002}O₂, or Li_{0.95}Na_{0.02}Co_{0.993}Al_{0.005}Mg_{0.001}Ti_{0.001}O₂; and/or the lithium cobalt oxide with the O3 phase structure has a core-shell structure, comprising a shell layer and a core, wherein the core comprises a material with a chemical formula of LiCo_{0.993}Al_{0.005}Mg_{0.001}Ti_{0.001}O₂, and the shell layer comprises a material comprising TiO₂, WO₃, and Y₂O₃.

6. The positive electrode material according to claim 4 or 5, **characterized in that** based on a total weight of the lithium cobalt oxide with the O3 phase structure, a weight content of the shell layer ranges from 0.05 wt% to 2 wt%.

7. The positive electrode material according to any one of claims 1 to 6, **characterized in that** a median particle size D50 of the lithium cobalt oxide with the O3 phase structure ranges from 15.5 µm to 18 µm, and/or a median particle size D50 of the lithium cobalt oxide with the O2 phase structure ranges from 7 µm to 10 µm.

8. The positive electrode material according to any one of claims 1 to 7, **characterized in that** through an X-ray diffraction test, the positive electrode material has all characteristic peaks of an XRD spectrum of the lithium cobalt oxide with the O3 phase structure, and the positive electrode material further comprises a (002) characteristic peak, a (102) characteristic peak, and a (103) characteristic peak, and ranges of diffraction angles 20 of the characteristic peaks are respectively: 18.0 < 2θ₍₀₀₂₎ < 19.4, 41.2 < 2θ₍₁₀₂₎ < 42.2, 46.5 < 2θ₍₁₀₃₎ < 47.5.

9. The positive electrode material according to any one of claims 1 to 8, **characterized in that** a median particle size D50 of the positive electrode material ranges from 12 µm to 17 µm.

10. A positive electrode plate, **characterized in that** the positive electrode plate comprises the positive electrode material according to any one of claims 1 to 9.

11. The positive electrode plate according to claim 10, **characterized in that** the positive electrode plate comprises a positive electrode current collector and a positive electrode active material layer disposed on at least one surface of the positive electrode current collector, and the positive electrode active material layer comprises the positive electrode material.

12. The positive electrode plate according to claim 10 or 11, **characterized in that** the positive electrode active material layer further comprises a conductive agent and a binder, and mass percentages of components in the positive electrode active material layer are: the positive electrode material ranging from 70 wt% to 99 wt%, the conductive agent ranging from 0.5 wt% to 15 wt%, and the binder ranging from 0.5 wt% to 15 wt%;
preferably, the mass percentages of the components in the positive electrode active material layer are: the positive electrode material ranging from 80 wt% to 98 wt%, the conductive agent ranging from 1 wt% to 10 wt%, and the binder ranging from 1 wt% to 10 wt%; and
preferably, the mass percentages of the components in the positive electrode active material layer are: the positive electrode material ranging from 90 wt% to 98 wt%, the conductive agent ranging from 1 wt% to 5 wt%, and the binder ranging from 1 wt% to 5 wt%; and
preferably, the mass percentages of the components in the positive electrode active material layer are: the positive electrode material ranging from 90 wt% to 96 wt%, the conductive agent ranging from 2 wt% to 5 wt%, and the binder ranging from 2 wt% to 5 wt%.

13. A battery, **characterized in that** the battery comprises the positive electrode material according to any one of claims 1 to 9, or the battery comprises the positive electrode plate according to any one of claims 10 to 12.

14. The battery according to claim 13, **characterized in that** a charge cut-off voltage of the battery is greater than or equal to 4.5 V.
